# EUROPÄISCHE PATENTSCHRIFT

(11) **EP 2 812 370 B1**
(45) Veröffentlichungstag und Bekanntmachung des Hinweises auf die Patenterteilung: **04.11.2015**
(21) Anmeldenummer: 13702487.3
(22) Anmeldetag: 05.02.2013
(51) Int. Cl.: C08G 18/73, C08J 9/00, C08G 18/32, C08J 9/36, C08G 18/48, C08G 18/76, C08G 18/79, C08G 18/09, C08G 18/10, C08G 18/22, C08G 101/00, C08G 18/42

(54) **VERFAHREN ZUM HERSTELLEN EINES POLYURETHAN-POLYISOCYANURAT-HARTSCHAUMSTOFFS**
METHOD FOR PRODUCING A HARD POLYURETHANE-POLYISOCYANURATE FOAMED MATERIAL
PROCÉDÉ POUR PRODUIRE UNE MOUSSE RIGIDE À BASE DE POLYURÉTHANE-POLYISOCYANURATE

(30) Priorität: 08.02.2012 EP 12154364
(43) Veröffentlichungstag der Anmeldung: 17.12.2014
(73) Patentinhaber: Covestro Deutschland AG, 51373 Leverkusen (DE)
(72) Erfinder: SCHLEIERMACHER, Stephan, 50259 Pulheim (DE); KLASEN, Patrick, 52391 Vettweiß (DE); ALBERS, Reinhard, 51375 Leverkusen (DE); MOERS, Stephan, 41379 Brüggen (DE); STEINMEISTER, Dirk, 51377 Leverkusen (DE); SEIDEL, Dieter, 51143 Köln (DE); HEINEMANN, Torsten, 42799 Leichlingen (DE); ARNTZ, Hans-Detlef, 53797 Lohmar (DE)
(74) Vertreter: Levpat
(86) Internationale Anmeldenummer: PCT/EP2013/052238
(87) Internationale Veröffentlichungsnummer: WO 2013/117541

(56) Entgegenhaltungen:
- EP-A1- 1 632 511
- EP-A2- 0 293 211
- EP-A2- 0 297 687
- US-A- 4 299 924

## Beschreibung

Die vorliegende Erfindung betrifft ein Verfahren zum Herstellen eines insbesondere versprühbaren Polyurethan-Polyisocyanurat-Hartschaumstoffs durch Reaktion einer Mischung umfassend eine Isocyanatkomponente und eine Aktivatorkomponente. Die Erfindung betrifft weiterhin einen nach dem erfindungsgemäßen Verfahren hergestellten Polyurethan-Polyisocyanurat-Hartschaumstoff, sowie die Verwendung eines solchen Hartschaumstoffs zum Herstellen von wärmedämmenden Bauteilen. Die Erfindung betrifft weiterhin ein wärmedämmendes Bauteil umfassend einen erfindungsgemäßen Polyurethan-Polyisocyanurat-Hartschaumstoff.

In der Öl- und Gasindustrie, beispielsweise, werden sprühfähige Polyurethansysteme zur Isolierung von Rohren eingesetzt. Hier verwendete Polyurethan-Polyisocyanurat (PUR-/PIR) -Hart-schaumstoffe müssen strenge Anforderungen hinsichtlich Haftung, Druckfestigkeit und Emission bei gleichzeitig hervorragenden Isolier- und Brandschutzeigenschaften erfüllen. Selbiges gilt für weitere Bauteile, wie beispielsweise Gebäudebauteile, die etwa einer Wärmedämmung dienen sollen.

Die für eine Herstellung entsprechender PUR-/PIR-Hartschaumstoffe verwendbaren Sprühsysteme sollten vorzugsweise eine kurze Abbindezeit besitzen, um ein übermäßiges Abtropfen oder Verfließen zu vermeiden. Dies wird im Stand der Technik überwiegend durch einen entsprechend hohen Einsatz von Katalysatoren und Vernetzern erreicht. Allerdings besteht beim Einsatz von zu großen Mengen an Katalysator und Vernetzer die Gefahr der Versprödung. Solche Schäume würden eine sandige Oberfläche und Verbundmaterialen damit sehr schlechte Haftfestigkeiten an beispielsweise Stahlrohren besitzen. Darüber hinaus bieten derartige Systeme meist eine eingeschränkte Stabilität insbesondere bei hohen Temperaturen und eingeschränkte Flammschutzeigenschaften.

GB 1,104,394 betrifft Isocyanurat-Schäume und ein Verfahren zum Herstellen von Isocyanurat-Schäumen. Das Verfahren kann in einem Einstufen-Verfahren oder in einer ein Prepolymer umfassenden Route, also in einem Mehrstufen-Verfahren durchgeführt werden. Als Isocyanat kann beispielsweise Diphenylmethandüsocyanat eingesetzt werden und als gegenüber Isocyanaten reaktive Komponente sind gemäß dieser Druckschrift solche geeignet, die bis zu 8 Hydroxylgruppen tragen, wie beispielsweise Polyalyklenetherglykole, und eine OH-Zahl von 30-600 mg KOH/g aufweisen. In dem Reaktionsgemisch kann das Isocyanat ferner in einem Überschuss von 400-800 mol% vorliegen. Darüber hinaus werden bezüglich der Isocyanat-Funktionalität beziehungsweise bezüglich des Isocyanat-Gehalts keine spezifischen Angaben gemacht.

US 4,299,924 beschreibt Polyisocyanurat-Harze, die erhalten werden können durch eine Reaktion eines Polyisocyanats mit einem polymeren Polyol, erhalten aus einem hochmolekularen Polyol mit einem Molgewicht von wenigstens 4500, gegebenenfalls in Gegenwart eines Vernetzungsmittels. Bei einer Reaktion ohne Vernetzungsmittel wird ein Isocyanatindex von 1500 - 5000 verwendet, wohingegen der Isocyanatindex bei einem Verfahren mit Vernetzungsmittel in einem Bereich von 200-5000 liegt. Bezüglich der Isocyanat-Funktionalität werden keine spezifischen Angaben gemacht.

EP 0 698 422 A1 beschreibt ein Verfahren zur Isolierung von Rohren nach dem Verbundprinzip, wobei auf ein Stahlrohr mindestens eine Schicht eines Polyisocyanuratkunststoffs und anschließend mindestens eine Schicht eines Polyurethanhartschaumstoffes aufgebracht wird, worauf eine Deckschicht- folgt. Der Polyisocyanuratkunststoff kann dabei hergestellt werden durch eine Umsetzung von einem aromatischen Polyisocyanat oder einem endständige NCO-Gruppen aufweisenden Prepolymer mit einem Isocyanat-Gehalt von 5 bis 20 Gew.-% mit einer Polyolkomponente enthaltend einen Polyether, Wasser, Vernetzer und einen Trimerisierungskatalysator, wobei die Polyolkomponente eine OH-Zahl in einem Bereich von 300-600 mg KOH/g aufweist.

WO 2007/042407 A1, WO 2004 111101 A1 und WO 2007/042411 A1 betreffen Verfahren zum Herstellen eines Polyisocyanurat-Polyurethan-Materials. Bei derartigen Verfahren werden als Ausgangssubstanzen ein Polyetherpolyol mit einem hohen Oxyethylengehalt und ein Polyisocyanat mit einem hohen Diphenylmethandiisocyanatgehalt verwendet. In diesen Verfahren werden bei hohen Isocyanatindizes geringe NCO-Funktionalitäten von < 2,2 verwendet. Darüber hinaus werden in diesen Druckschriften Hartschäume mit einem hohen Hartsegmentanteil hergestellt (WO 2007/042407 A1), es wird unter Wasserausschluss gearbeitet (WO 2004 111101 A1) oder es liegen Isocyanat-Kennzahlen in einem Bereich von 1600-100000 vor (WO 2007/042411 AI).

EP 1 967 535 A1 offenbart ein kompaktes Polyisocyanurat und ein Verfahren zu seiner Herstellung. Herstellungsverfahren von kompakten Polymeren sind jedoch auf eine Herstellung von Schäumen nicht übertragbar.

Aus dem Vorangegangenen wird deutlich, dass weiterhin der Bedarf an verbesserten sprühbaren PUR-/PIR-Hartschäumen besteht. Die vorliegende Erfindung hat sich daher die Aufgabe gestellt, insbesondere wassergetriebene PUR-/PIR-Hartschäume bereitzustellen, die ein gutes Wärmedämmverhalten bei gleichzeitig hoher Stabilität und guter Flammbeständigkeit aufweisen.

Diese Aufgabe wird erfindungsgemäß gelöst durch ein Verfahren zum Herstellen eines Polyurethan-Polyisocyanurat-Hartschaumstoffs **C**, umfassend den Schritt der Umsetzung von
(i) einem Isocyanat-terminierten Prepolymer **B**, mit
(ii) einer Aktivatorkomponente **A,** umfassend wenigstens einen Trimerisierungskatalysator **A1** und wenigstens ein Treibmittel **A3**
   in einer Reaktionsmischung unter Ausbildung eines Schaums, wobei
   - ein Isocyanat-terminiertes Prepolymer **B,** erhalten aus einer Reaktion eines Isocyanats **B1** aufweisend eine mittlere Isocyanatfunktionalität von ≥ 2,3 bis ≤ 2,9 mit einer Polyolkomponente **B2,** verwendet wird,
   - die Aktivatorkomponente **A** Wasser als Treibmittel **A3** in einer Menge von ≥ 5 Gew.-% bis ≤ 50 Gew.-% umfasst,
   - die Isocyanat-Kennzahl in der Reaktionsmischung in einem Bereich von ≥ 400 bis ≤ 1500 liegt,
   - der NCO-Gehalt des Prepolymers **B** in einem Bereich von ≥ 21 Gew.-% bis ≤ 30 Gew.-% liegt, bezogen auf die Gesamtmasse des Prepolymers **B,** und
   - wobei bei der Umsetzung des Prepolymers B und der Aktivatorkomponente A ein Umsatzbeitrag zu Polyisocyanurat von ≤ 75% erzielt wird.

Es wurde nun überraschenderweise gefunden, dass sich durch die entsprechende Kombination der vorgenannten Komponenten PUR-/PIR-Hartschaumstoffe **C** mit hervorragenden Flammschutzeigenschaften, Wärmedämmungseigenschaften und ferner mit hervorragenden Stabilitätseigenschaften herstellen lassen.

Entgegen der herrschenden Meinung, dass gute Flammschutzeigenschaften wesentlich auf einen hohen Umsatz des Polyisocyanats zu Polyisocyanuraten zurückzuführen seien, können erfindungsgemäß PUR-/PIR-Hartschaumstoffe **C** mit guten Flammschutzeigenschaften, einer guten Wärmeleitfähigkeit und einer guten Stabilität schon mit einem vergleichsweise geringen Polyisocyanuratumsatz erzeugt werden.

Ein Polyurethan-Polyisocyanurat-Hartschaumstoff beziehungsweise ein PUR-/PIR-Hartschaumstoff ist dabei ein solcher, der im Wesentlichen Polyisocyanuratgruppen aufweist, bei dem jedoch auch Polyurethangruppen vorhanden sein können.

Unter einem Hartschaumstoff kann im Rahmen der vorliegenden Erfindung insbesondere ein Schaumstoff, also nach DIN 7726 ein Zweiphasensystem, bei dem Gas in einer festen Matrix angeordnet, insbesondere dispergiert ist, verstanden werden, der als Hartschaumstoff eine hohe Druckfestigkeit von ≥ 0,1 MPa aufweist.

Unter einer Aktivatorkomponente A wird im Rahmen der vorliegenden Erfindung eine Komponente verstanden werden, welche eine Polyisocyanuratbildung aktivieren kann.

Unter einer auch als Isocyanat-Index genannten Isocyanat-Kennzahl wird im Rahmen der vorliegenden Erfindung der Überschuss an Isocyanat bezüglich einer theoretisch benötigten Menge für eine 1:1-Reaktion aller Isocyanatgruppen mit isocyanatreaktiven Verbindungen in der Reaktionsmischung beziehungsweise bei der Isocyanuratbildung verstanden.

Unter einer mittleren Isocyanat-Funktionalität beziehungsweise NCO-Funktionalität wird im Sinne der vorliegenden Erfindung die mittlere Anzahl an Isocyanatgruppen pro Molekül des eingesetzten Isocyanats **B1** verstanden.

Unter einem Isocyanat-Gehalt beziehungsweise NCO-Gehalt wird im Rahmen der vorliegenden Erfindung der Gewichtsanteil an NCO-Gruppen im Isocyanat-terminierten Prepolymer **B** verstanden werden.

Die OH-Zahl beziehungsweise Hydroxyzahl entspricht im Rahmen der Erfindung insbesondere der Menge Kaliumhydroxid in Milligramm, welche der bei einer Acetylierung von einem Gramm Substanz gebundenen Menge Essigsäure entspricht. Alle genannten OH-Zahlen beziehungsweise Hydroxylzahlen lassen sich gemäß DIN 53240 bestimmen.

Die mittlere Funktionalität der Polyolkomponente **B2** wird im Rahmen der vorliegenden Erfindung die mittlere Anzahl an Hydroxygruppen pro Molekül der eingesetzten Polyolkomponente **B2** bezeichnet.

Nachfolgend wird zunächst auf das eingesetzte Prepolymer **B** eingegangen. Das Isocyanat-terminierte Prepolymer **B** wird erhalten aus einer Reaktion eines Isocyanats **B1** mit einer Polyolkomponente **B2**. Beispiele für geeignete Isocyanate **B1** sind 1,4-Butylendiisocyanat, 1,5-Pentandiisocyanat, 1,6-Hexamethylendiisocyanat (HDI), Isophorondiisocyanat (IPDI), 2,2,4-und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen, oder Mischungen umfassend eine oder mehrere der vorgenannten Komponenten.

Neben den vorstehend genannten Isocyanaten **B1** können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Die mittlere Isocyanat-Funktionalität des Isocyanats **B1** liegt dabei in einem Bereich von ≥ 2,3 bis ≤ 2,9.

Weiterhin liegt der Isocyanat-Gehalt des Isocyanatprepolymers **B** in einem Bereich von ≥ 21 Gew.-% bis ≤ 30 Gew.-%. Besonders bevorzugt liegt der NCO-Gehalt des Prepolymers **B** in einem Bereich von > 22 Gew.-% bis ≤ 29 Gew.-%. Der Isocyanat-Gehalt lässt sich gemäß DIN 53185 bestimmen.

Darüber hinaus ist es erfindungsgemäß nicht ausgeschlossen, dass in der Reaktionsmischung weitere Isocyanatverbindungen neben dem Prepolymer **B** vorliegen. Diese können beispielsweise derartige sein, wie sie vorstehend zur Herstellung des Prepolymeren **B** beschrieben sind.

Von den Isocyanaten **B1** können auch polynukleare (polymere) Isocyanate, wie etwa polynukleares MDI umfasst sein.

Im Weiteren soll auf die zur Herstellung der Prepolymere **B** eingesetzte isocyanatreaktive Polyolkomponente **B2** näher eingegangen werden.

Beispiele für die Polyolkomponente **B2** sind etwa aromatische Polyesterpolyole, etwa Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden. Bevorzugt werden Ethylenglykol und Diethylenglykol eingesetzt.

Als Polycarbonsäuren können beispielsweise Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure oder Trimellitsäure eingesetzt werden. Bevorzugt werden Adipinsäure und Phthalsäureanhydrid eingesetzt.

Sofern die mittlere Funktionalität des zu veresternden Polyols ≥ 2 ist, können zusätzlich auch Monocarbonsäuren wie Benzoesäure und Hexancarbonsäure mit verwendet werden.

Bevorzugt werden für die Polyolkomponente **B2** Verbindungen eingesetzt, welche eine mittlere OH-Funktionalität von ≥ 2 bis ≤ 8, eine OH-Zahl von ≥ 28 mg KOH/g bis ≤ 500 mg KOH/g (DIN 53240) und gegebenenfalls primäre OH-Gruppen aufweisen.

Weiterhin kann die Polyolkomponente **B2** ein Polyetherpolyol umfassen.

Dabei kann als Polyetherpolyol wenigstens ein Additionsprodukt von Styroloxid, Ethylenoxid, Propylenoxid, Butylenoxid und/oder Epichlorhydrin an di- oder polyfunktionelle Startermoleküle verwendet werden.

Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Hinsichtlich der Prepolymere **B** sind die Polyolkomponenten **B2** bevorzugt ausgewählt aus aliphatischen oder aromatischen Polyetherpolyolen mit jeweils 2 bis 8 Hydroxylgruppen oder aliphatischen oder aromatischen Polyesterpolyolen mit jeweils einer zahlengemittelten Molekülmasse zwischen ≥ 200 g/mol und ≤ 12500 g/mol.

Besonders bevorzugt in der Gruppe der Polyolkomponenten B2 sind Polyetherpolyole. Ihre Brandergebnisse sind noch etwas besser als jene von Polyesterpolyolen gleicher OH-Zahl.

Weiterhin kann die Polyolkomponente **B2** bromierte und/oder chlorierte Polyole umfassen, wie beispielsweise Ixol M125, die die Flammbeständigkeit von PUR/PIR Hartschäumen bekanntermaßen verbessern.

In der Reaktionsmischung umfassend das Prepolymer **B** und die Aktivatorkomponente A kann weiterhin eine Isocyanat-Kennzahl in einem Bereich von ≥ 400 bis ≤ 1500 vorliegen.

Eine Herstellung der Prepolymeren **B** kann in einem für den Fachmann an sich bekannten und in der Literatur beschriebenen Einstufenverfahren erfolgen.

Im Folgenden wird auf die Aktivatorkomponente **A** näher eingegangen.

Beispiele für den umfassten Trimerisierungskatalysator **A1** beziehungsweise Polyisocyanuratkatalysator sind in einer weiteren Ausführungsform Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat und/oder Dioctylzinndiacetat, weiterhin Tris-(N,N-dimethylaminopropyl)-s-hexahydrotriazin, Tetramethylammoniumhydroxid und/oder Natriumhydroxid oder Natrium-N-[(2-hydroxy-5-nonylphenyl)methyl]-N-methylaminoacetat, Natriumacetat, Natriumoctoat, Kaliumacetat und/oder Kaliumoctoat oder Gemische der vorgenannten Katalysatoren.

Als besonders bevorzugt im Rahmen der vorliegenden Erfindung hat sich Kaliumacetat herausgestellt.

Hinsichtlich einer weiteren erfindungsgemäß nicht unmittelbar notwendigen aber auch nicht ausgeschlossenen Katalysatorkomponente **A2** sind Beispiele: aminische Katalysatoren, insbesondere ausgewählt aus der Gruppe Triethylendiamin, N,N-Dimethylcyclohexylamin, Dicyclohexylmethylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Tris-(dimethylaminopropyl)amin, Tris(dimethy)aminomethyl)phenol, Dimethylaminopropylformamid, N,N,N',N'-Tetramethylethylendiamin, N,N,N',N'-Tetramethylbutandiamin, Tetramethylhexandiamin, Pentamethyldiethylentriamin, Pentamethyldipropylentriamin, Tetramethyldiaminoethylether, Dimethylpiperazin, 1,2-Dimethylimidazol, 1-Azabicyclo[3.3.0]octan, Bis-(2-dimethylaminoethyl), Bis-(dimethylaminopropyl)-harnstoff, N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin und/oder Dimethylethanolamin.

Beispielsweise kann die weitere Katalysatorkomponente **A2** ein Treibkatalysator sein. Dieser kann beispielsweise in einem Anteil von ≥ 1 Gew.-% bis ≤ 14 Gew.-% vorliegen. Besonders geeignete Treibkatalysatoren sind dem Fachmann weitläufig bekannt und umfassen beispielsweise Aminkatalysatoren.

Die Gesamtkatalysatorkomponente kann beispielsweise in einem Anteil von ≥ 1 Gew.-% bis ≤ 80 Gew.-%, bezogen auf die Gesamtmasse der Aktivatorkomponente A, vorliegen.

Als Lösungsmittel für den Katalysator **A1** und/oder **A2** kann die Aktivatorkomponente A ein kurzkettiges Diol mit einer OH-Zahl von ≥ 400, wie beispielsweise Diethylenglykol, aufweisen.

Weiterhin kann die Aktivatorkomponente **A** einen Schaumstabilisator **A4** aufweisen, insbesondere in einem Anteil von ≥ 5 Gew.-% bis ≤ 50 Gew.-%, bezogen auf die Gesamtmenge der Aktivatorkomponente **A**. Der Schaumstabilisator **A4** kann bevorzugt ein Polyethersiloxan sein, welches im Allgemeinen als ein Copolymerisat aus Ethylen- und/oder Propylenoxid aufgebaut und mit einem Polydimethylsiloxanrest als Verbundmaterial ausgestaltet ist.

In einer weiteren Ausführungsform kann einem Gew.-Teil der Aktivatorkomponente **A** weiterhin ein beispielsweise flüssiges Flammschutzmittel **A5** insbesondere in einem Gehalt von ≥ 3 Gew.-Teilen bis ≤ 30 Gew.-Teilen zugesetzt werden. Das Flammschutzmittel kann bevorzugt Phosphorverbindungen umfassen. Derartige Flammschutzmittel **A5** sind zum Beispiel im "Kunststoffhandbuch", Band 7 "Polyurethane", Kapitel 6.1 beschrieben; rein beispielhaft seien genannt die Ester der Orthophosphorsäure und der Metaphosphorsäure, die ebenfalls Halogene enthalten können. Durch das Zusetzen von Flammschutzmittel **A5** können die Flammschutzeigenschaften weiter verbessert werden und auf das gewünschte Anwendungsgebiet maßgeschneidert werden.

Beispielsweise kann das Reaktionsgemisch vollständig wassergetrieben sein, also lediglich Wasser als Treibmittel **A3** aufweisen. Dabei kann Wasser in einem Anteil von ≥ 5 bis ≤ 50 Gew.-% vorliegen. In einer Ausführungsform kann das Treibmittel **A3** somit frei von Kohlenwasserstoff-Treibmitteln, halogenierten Kohlenwasserstoff-Treibmitteln und Halogenalkan-Treibmitteln sein. Der Begriff "frei von" schließt hierbei technisch unvermeidliche Spuren der genannten Treibmittel mit ein.

Alternativ kann die Aktivatorkomponente **A** neben Wasser ein weiteres Treibmittel umfassen. Dieses kann insbesondere ausgewählt sein aus Ameisensäure, Kohlendioxid, Stickstoff, fluorierten Kohlenwasserstoffen, linearen Kohlenwasserstoffen und zyklischen Kohlenwasserstoffen. Dabei können die weiteren Treibmittel bezüglich des Treibmittels **A3** in einem Gewichtsanteil von ≤ 95 Gew.-% bezogen auf die Gesamtmenge des gesamten Treibmittels **A3** vorliegen.

Weitere Aspekte und Ausführungsformen der vorliegenden Erfindung werden nachfolgend beschrieben. Sie können beliebig kombiniert werden, sofern sich nicht aus dem Zusammenhang eindeutig das Gegenteil ergibt.

In einer Ausführungsform weist die Reaktionsmischung, insbesondere die Aktivatorkomponente **A**, keine Polyole mit einer OH-Zahl von < 400 mg KOH/g auf. Folglich findet in der Reaktionslösung eine Umsetzung des Isocyanat-terminierten Prepolymers mit der Aktivatorkomponente **A** umfassend wenigstens einen Trimerisierungskatalysator und wenigstens ein Treibmittel statt. Eine insbesondere langkettige Polyolverbindung mit einer OH-Zahl von < 400 mg KOH/g ist jedoch nicht vorhanden. Etwaige insbesondere kurzkettige Polyolverbindungen mit einer OH-Zahl von ≥ 400mg KOH/g, wie beispielsweise für Katalysatorverbindungen verwendete Lösungsmittel, beispielsweise Diethylenglykol, können jedoch in der Aktivatorkomponente **A** enthalten sein.

In einer weiteren Ausführungsform weist die Reaktionsmischung, insbesondere die Aktivatorkomponente **A,** kein Flammschutzmittel **A5** auf. Erfindungsgemäß wurde gefunden, dass eine vorbeschriebene Reaktion unter Verwendung der beschriebenen Komponenten einen bereits sehr guten Flammschutz bieten kann. Somit kann anwendungsbedingt auf die Zugabe eines weiteren Flammschutzmittels **A5** in die Reaktionsmischung beziehungsweise in die Aktivatorkomponente **A** verzichtet werden. Beispielswiese können in dieser Ausgestaltung bereits PUR/PIR-Hartschaumstoffe erzeugt werden, die in die Brandschutzklasse B2 eingestuft werden können, ermittelbar nach DIN 4102.

In einer weiteren Ausführungsform wird bei der Umsetzung des Prepolymers **B** und der Aktivatorkomponente **A** ein Umsatzbeitrag zu Polyisocyanurat von ≤ 75% erzielt. Die Umsatzbeiträge sind beispielsweise ermittelbar durch ATR-FTIR-Spektroskopie. Aus den Peakflächen der relevanten Banden (NCO bei 2270 cm⁻¹, Isocyanurat bei 1410 cm⁻¹, Carbodiimid bei 2130 cm⁻¹ und NH-Streck-Schwingung für Urethan und Harnstoff bei 3400 cm⁻¹) wurden der Gesamt-NCO-Umsatz und die Umsatzbeiträge der Reaktionen zu Isocyanurat, Carbodiimid und Urethan bzw. Harnstoff berechnet. Es konnte gefunden werden, dass durch das erfindungsgemäße Verfahren bereits bei derartig geringen Umsatzbeiträgen zu Isocyanuratgruppen sehr gute Flammschutzeigenschaften beziehungsweise Brandschutzeigenschaften erzielt werden konnten. Diese Erkenntnis steht im Gegensatz zu der weitläufigen Meinung, wonach ein guter Brandschutz beziehungsweise Flammschutz nur durch eine hohe Anzahl an Isocyanuratgruppen beziehungsweise einen hohen Umsatzbeitrag an Isocyanuratgruppen möglich ist. Der Umsatzbeitrag zu Polyisocyanurat kann dabei insbesondere den Beitrag der ablaufenden Reaktion zu Isocyanuratgruppen bedeuten.

In einer weiteren Ausführungsform umfasst das Verfahren den weiteren Schritt eines Sprühauftrags der Reaktionsmischung auf ein Substrat. Folglich können in dieser Ausführungsform die Aktivatorkomponente **A** und das Prepolymer **B** auf ein Substrat versprüht werden. Die Temperatur der Substratoberfläche kann dabei zum Beispiel in einem Bereich von ≥ 20 °C bis ≤ 70 °C, vorzugsweise von ≥ 30 °C bis ≤ 60 °C liegen. Nach dem Aufsprühen und Aushärten des Schaums können weitere Schichten auf den Schaum aufgetragen werden. Zum Beispiel kann auf ein so behandeltes Substrat noch eine Polyolefin-Deckschicht aufextrudiert werden. In dieser Ausgestaltung können durch ein besonders einfaches Auftragungsverfahren etwa Wärmedämmungen mit guten Flammschutzeigenschaften hergestellt werden. Als Substrat können beispielsweise Verwendung finden Bauwerke, wie Wände, Decken und Böden etwa in Gebäuden oder Rohre für den Transport flüssiger oder gasförmiger Medien.

In einer weiteren Ausführungsform werden das Prepolymer **B** und die Aktivatorkomponente **A** einzeln über Einlässe von außen in einen Sprühkanal einer Düse eingeleitet und diese in dem Sprühkanal vermischt, wobei der Sprühkanal eine oder mehr Mischebenen aufweisen kann, in welche durch wenigstens einen tangential angeordneten Gaskanal wenigstens ein Mischgas eingeleitet wird.

In dieser Ausführungsform wird es ermöglicht, das Prepolymer **B** und die Aktivatorkomponente **A** in einem Sprühkanal in einer oder mehreren Mischebenen mit Gasströmen zu vermischen.

Durch eine tangentiale Anordnung des oder der Gaskanäle kann der axialen Strömung somit eine radiale Strömungskomponente aufgeprägt werden. Durch diese radiale Strömungskomponente werden die Komponenten, in diesem Fall etwa das Prepolymer **B** und die Aktivatorkomponente **A**, intensiv miteinander vermischt. Die Strömungsrichtung des Gasstroms bei Eintritt in den Sprühkanal verläuft erfindungsgemäß außerhalb des Mittelpunktes des Sprühkanals.

In dieser Ausführungsform findet somit insbesondere ein sogenanntes LIA-Verfahren (liquid injection by airstream) statt.

Der Gasstrom kann beispielsweise ausgewählt werden aus der Gruppe umfassend einen Luftstrom, Stickstoffstrom, Edelgasstrom, Kohlendioxidstrom und/oder Stickstoffdioxidstrom. Ferner kann der Gasstrom weiterhin eine Flüssigkeit und/oder einen Feststoff umfassen und so ein Mischgas ausbilden. Die Flüssigkeit und/oder der Feststoff können beispielsweise durch in die Reaktionsmischung beziehungsweise in die Aktivatorkomponente **A** einzubringende Additive gebildet werden.

Ein weiterer Gegenstand der vorliegenden Erfindung ist ein Polyurethan-Polyisocyanurat-Hartschaumstoff **C**, erhältlich nach einem erfindungsgemäßen Verfahren. Der Polyurethan-Polyisocyanurat-Hartschaumstoff **C** weist bevorzugte Flammschutzeigenschaften, Dämmungseigenschaften und Stabilitätseigenschaften auf. Insbesondere kann der Polyisocyanurat-Hartschaumstoff **C** sich durch eine sehr geringe Brennbarkeit, eine hohe Druckfestigkeit bei geringer Wärmeleitzahl und hoher thermischer Beständigkeit auszeichnen.

Beispielsweise kann der Polyurethan-Polyisocyanurat-Hartschaumstoff **C** eine Rohdichte von ≤ 150 kg/m³ aufweisen. In diesem Dichtebereich weist der Schaum ein besonders günstiges Verhältnis von eingeschlossenem Gasvolumen zu Polyurethan-Polyisocyanurat-Matrix auf, so dass die Wärmeleitfähigkeit besonders gering sein kann, was eine besonders gute Wärmedämmung bedingen kann. Die Dichte lässt sich in einem vereinfachten Verfahren durch die Ermittlung der Masse eines Würfels von 10 cm Kantenlänge berechnen.

In einer Ausführungsform weist der Polyurethan-Polyisocyanurat-Hartschaumstoff **C** bei einem Brandtest/Kante eine Flammenhöhe von ≤ 150 mm, ermittelbar nach DIN 4102-1, auf und/oder weist der Polyurethan-Polyisocyanurat-Hartschaumstoff **C** bei einem Brandtest/Fläche eine Flammenhöhe von ≤ 150 mm, ermittelbar nach DIN 4102-1, auf. In dieser Ausgestaltung kann ein besonders vorteilhaftes Brandschutzverhalten ermöglicht werden. Der Brandtest/Kante beziehungsweise der Brandtest/Fläche umfasst dabei eine Kantenbeflammung beziehungsweise eine Flächenbeflammung, wie dies aus der DIN 4102-1 ersichtlich ist.

In einer weiteren Ausführungsform weist der Polyurethan-Polyisocyanurat-Hartschaumstoff **C** eine Wärmeleitzahl von ≤ 32 mW/(m × K), ermittelbar nach DIN 52616, auf. Dadurch ist ein besonders gutes Wärmedämmverhalten gewährleistet.

In einer weiteren Ausführungsform weist der Polyurethan-Polyisocyanurat-Hartschaumstoff **C** eine Druckfestigkeit von ≥ 0,20 MPa, ermittelbar nach DIN 826, auf. Besonders bevorzugt kann der Polyurethan-Polyisocyanurat-Hartschaumstoff **C** eine Druckfestigkeit von ≥ 0,3 MPa aufweisen. Dadurch erhält der Polyurethan-Polyisocyanurat-Hartschaumstoff **C** eine besonders große Dimensionsstabilität.

Schließlich betrifft die Erfindung auch die Verwendung eines erfindungsgemäßen Polyurethan-Polyisocyanurat-Hartschaumstoffs **C** zur Herstellung von wärmedämmenden Bauteilen. Beispiele für wärmedämmende Bauteile umfassen beispielsweise Dämmschäume, Gebäudeteile, Rohre, Blockschäume, Paneele oder Sandwichelemente. Weiterhin ist ein Polyisocyanurat-Hartschaumstoff **C** gut geeignet für Isolierschichten für Wände, Decken und Böden in Gebäuden oder als Bestandteil von Verbundmaterialien, wie beispielsweise wärmeisolierte Rohre für den Transport flüssiger oder gasförmiger Medien. Insbesondere bei wärmedämmenden Bauteilen kann es erwünscht sein, dass der Polyurethan-Polyisocyanurat-Hartschaumstoff **C** eine gute Wärmeleitzahl bei gutem Brandschutzverhalten und guter Stabilität aufweist.

Die Erfindung betrifft weiterhin ein wärmedämmendes Bauteil umfassend einen erfindungsgemäßen Polyurethan-Polyisocyanurat-Hartschaumstoff **C**. Beispiele für derartige Bauteile umfassen nicht beschränkend Isolierschichten für Wände, Decken und Böden in Gebäuden oder als Bestandteil von Verbundmaterialien, wie beispielsweise wärmeisolierte Rohre für den Transport flüssiger oder gasförmiger Medien.

Die vorliegende Erfindung wird anhand der nachfolgenden Beispiele weiter erläutert, ohne jedoch darauf beschränkt zu sein.

### Beispiele

### Glossar:

- Isocyanatblend 1:: Gemisch, bestehend aus 2,2'MDI (0,4 Gew.-%), 2,4'MDI (55 Gew.-%) 4,4'MDI (44,6 Gew.-%), mittlere Funktionalität von 2,0.
- Isocyanatblend 2:: Gemisch, bestehend aus 2,2'MDI (0,3 Gew.-%), 2,4'MDI (4,2 Gew.-%), 4,4'MDI (49,1 Gew.-%), 3-Kern MDI (32,2 Gew.-%), 4-Kern MDI 14,2 Gew.-%), mittlere Funktionalität von 2,9.
- Polyol 1:: Polyetherpolyol mit einer Hydroxylzahl von 37 mg KOH/g (DIN 53240) und einer durchschnittlichen OH-Funktionalität von 3. Erhalten aus der Umsetzung von Glycerin als Starterkomponente mit Ethylenoxid und Propylenoxid, wobei ein Verhältnis von Ethylenoxideinheiten (EO) zu Propylenoxideinheiten (PO) von 71 Gew.-% / 29 Gew.-% in dem Polyetherpolyol vorliegt.
- Polyol 2:: Polyetherpolyol mit einer Hydroxylzahl von 112 mg KOH/g (DIN 53240) und einer durchschnittlichen OH-Funktionalität von 2. Erhalten aus der Umsetzung von Propylenglykol als Starterkomponente mit Propylenoxid.
- Polyol 3:: Poly(diethylenglykoladipat), Säurezahl 0,5, OH-Zahl 112 mg KOH/g, durchschnittliche OH-Funktionalität von 2.
- Polyol 4:: Polyetherpolyol mit einer Hydroxylzahl von 35 mg KOH/g (DIN 53240) und einer durchschnittlichen OH-Funktionalität von 3. Erhalten aus der Umsetzung von Glycerin als Starterkomponente mit Ethylenoxid und Propylenoxid, wobei ein Verhältnis von Ethylenoxideinheiten (EO) zu Propylenoxideinheiten (PO) von 13,5 Gew.-% / 86,5 Gew.-% in dem Polyetherpolyol vorliegt.
- Polyol 5:: Polyetherpolyol mit einer Hydroxylzahl von 56 mg KOH/g (DIN 53240) und einer durchschnittlichen OH-Funktionalität von 2. Erhalten aus der Umsetzung von Propylenglykol als Starterkomponente mit Propylenoxid.
- PIR-Katalysator:: Kaliumacetat in Diethylenglykol (1:3) (Trimerisierungskatalysator)
- Treibkatalysator:: Niax^{®} A1 70 Gew.-% Bis-(2-dimethylaminoethyl) ether gelöst in 30 Gew.-% Dipropylenglykol, (Momentive)
- Schaumstabilisator:: Tegostab^{®} B 8465 (Evonik)

In den nachfolgenden Tabellen sind die Zusammensetzungen der Isocyanat-terminierten Prepolymere **B** bestehend aus einem Isocyanatgemisch **B1** und einem Polyol **B2** wiedergegeben, wobei die Beispiele 1 bis 11 (Tabellen 1 bis 3) erfindungsgemäße Beispiele darstellen, wohingegen die Vergleichsbeispiele 12 bis 15 (Tabelle 4) keine erfindungsgemäßen Zusammensetzungen zeigen.

**Tabelle 1**

| Beispiel | | 1 | 2 | 3 |
|---|---|---|---|---|
| **Polyol** | OH-Zahl | | | |
| Polyol 1 | 37 | 27,46 | 9,11 | 27,72 |
| | | | | |

| **Isocyanat** | NCO% | | | |
|---|---|---|---|---|
| Isocyanatblend 1 | 33,6 | 41,90 | 53,99 | |
| Isocyanatblend 2 | 30,8 | 27,94 | 36,00 | 72,28 |
| Polyol OH-Zahl | | 37 | 37 | 37 |
| Polyol Funktionalität | | 3 | 3 | 3 |
| Isocyanat NCO% soll | | 22 | 29 | 22 |
| Isocyanat Funktionalität | | 2,3 | 2,3 | 2,9 |
| EO% im Prepolymer | | 21 | 7 | 20 |
| EO% im Polyol | | 71 | 71 | 71 |
| | | | | |
| Härte | | o.k. | o.k. | o.k. |
| Rohdichte frei | | 93,2 | 55,1 | 130,3 |
| Abbindezeit | | 60 | 31 | 44 |
| Rohdichte Prüfkörper | kg/m³ | - | 64,3 | - |
| Wärmeleitzahl | mW/(m × K) | - | 24,9 | - |
| Brandtest Kante | mm | - | 122 | - |
| Brandtest Fläche | mm | | 122 | |
| Torsion | °C | - | >210 | - |
| Druckfestigkeit in SR | MPa | - | 0,39 | - |
| Druckfestigkeit senkrecht 1 | MPa | - | 0,38 | - |
| Panel Nr.2 | Kg/m³ | | 72,1 | |
| Brandtest Kante | mm | | 115 | |
| Brandtest Fläche | mm | | 122 | |

**Tabelle 2**

| Beispiel | | 4 | 5 | 6 | 7 |
|---|---|---|---|---|---|
| **Polyol** | OH-Zahl | | | | |
| Polyol 4 | 35 | 9,91 | 5,386 | | |
| Polyol 5 | 56 | | | 9,49 | 5,14 |
| | | | | | |

| **Isocyanat** | NCO% | | | | |
|---|---|---|---|---|---|
| Isocyanatblend 1 | 33,6 | 54,04 | | 54,31 | |
| Isocyanatblend 2 | 30,8 | 36,03 | 94,61 | 36,2 | 94,86 |
| Polyol OH-Zahl | | 35 | 35 | 56 | 56 |
| Polyol Funktionalität | | 3 | 3 | 2 | 2 |
| Isocyanat NCO% soll | | 29 | 29 | 29 | 29 |
| Isocyanat Funktionalität | | 2,3 | 2,9 | 2,3 | 2,9 |
| EO% im Iso | | 1 | 1 | 0,0 | 0,0 |
| EO% im Polyol | | 13 | 13 | 0 | 0 |
| | | | | | |
| Härte | | o.k. | o.k. | o.k. | o.k. |
| Rohdichte frei | | 65,30 | 72,00 | 57,70 | 70,20 |
| Abbindezeit | | 45,00 | 50,00 | 51,00 | 53,00 |
| Rohdichte Prüfkörper | kg/m³ | 73,40 | 82,70 | 72,40 | 85,00 |
| Wärmeleitzahl | mW/(m × K) | 25,50 | 25,80 | 25,90 | 25,70 |
| Brandtest Kante | mm | 123,00 | 78,00 | 128,00 | 76,00 |
| Brandtest Fläche | mm | 123,00 | 80,00 | 136,00 | 92,00 |
| Torsion | °C | >210 | >210 | >210 | >210 |
| Druckfestigkeit in SR | MPa | 0,47 | 0,62 | 0,41 | 0,52 |
| Druckfestigkeit senk. 1 | MPa | 0,67 | 0,93 | 0,61 | 0,60 |
| Panel Nr.2 | Kg/m³ | 84,9 | 82,2 | | |
| Brandtest Kante | mm | 112 | 68 | | |
| Brandtest Fläche | mm | 118 | 80 | | |

**Tabelle 3**

| Beispiel | | 8 | 9 | 10 | 11 |
|---|---|---|---|---|---|
| **Polyol** | OH-Zahl | | | | |
| Polyol 2 | 112 | | | 8,52 | 4,59 |
| Polyol 3 | 112 | 8,52 | 4,59 | | |
| | | | | | |

| **Isocyanat** | NCO% | | | | |
|---|---|---|---|---|---|
| Isocyanatblend 1 | 33,6 | 54,89 | | 54,89 | |
| Isocyanatblend 2 | 30,8 | 36,59 | 95,41 | 36,59 | 95,41 |
| Polyol OH-Zahl | | 112 | 112 | 112 | 112 |
| Polyol Funktionalität | | 2 | 2 | 2 | 2 |
| Isocyanat NCO% soll | | 29 | 29 | 29 | 29 |
| Isocyanat Funktionalität | | 2,3 | 2,9 | 2,3 | 2,9 |
| EO% im Iso | | | | 0 | 0 |
| EO% im Polyol | | | | 0 | 0 |
| | | | | | |
| Härte | | o.k. | o.k. | o.k. | o.k. |
| Rohdichte frei soll | | 51,00 | 75,20 | 50,70 | 68,00 |
| Abbindezeit | | 76,00 | 98,00 | 52,00 | 54,00 |
| Rohdichte Prüfkörper | kg/m³ | 67,00 | 85,00 | 69,00 | 83,00 |
| Wärmeleitzahl | mW/(m × K) | 26,30 | 24,70 | 25,50 | 25,90 |
| Brandtest Kante | mm | 134,00 | 84,00 | 122,0 | 74,00 |
| Brandtest Fläche | mm | 140,00 | 100,0 | 140,0 | 86,00 |
| Torsion | °C | >210 | >210 | >210 | >210 |
| Druckfestigkeit in SR | MPa | 0,44 | 0,54 | 0,42 | 0,55 |
| Druckfestigkeit senk. 1 | MPa | 0,56 | 0,64 | 0,47 | 0,69 |

**Tabelle 4**

| Vergleichsbeispiele | | 12 | 13 | 14 | 15 |
|---|---|---|---|---|---|
| **Polyol** | OH-Zahl | | | | |
| Polyol 1 | 37 | 66,81 | 45,42 | 65,65 | 48,14 |
| | | | | | |

| **Isocyanat** | NCO% | | | | |
|---|---|---|---|---|---|
| Isocyanatblend 1 | 33,6 | 19,91 | 34,78 | | |
| Isocyanatblend 2 | 30,8 | 13,28 | 23,20 | 34,35 | 51,86 |
| Polyol OH-Zahl | | 37 | 37 | 37 | 37 |
| Polyol Funktionalität | | 3 | 3 | 3 | 3 |
| Isocyanat NCO% soll | | 9 | 15 | 9 | 15 |
| Isocyanat Funktionalität | | 2,3 | 2,3 | 2,9 | 2,9 |
| EO% im Iso | | 47 | 35 | 47 | 34 |
| EO% im Polyol | | 71 | 71 | 71 | 71 |
| Härte | | zu weich | zu weich | zu weich | zu weich |
| Abbindezeit | | - | 180 | 60 | 170 |

Aus den gemäß den vorbeschriebenen Tabellen hergestellten Prepolymeren **B** wurden im Folgenden unter Verwendung einer Aktivatorkomponte **A** Probekörper hergestellt.

Dabei enthielten die Aktivatorkomponenten **A** jeweils als Additive einen Treibkatalysator **A2** (Niax A1; 7 Gew.-% bezogen auf die Gesamtmenge der Aktivatorkomponente **A**), einen PIR-Katalysator **A1** (Kaliumacetat in Diethylenglykol, 1:3; 39 Gew.-% bezogen auf die Gesamtmenge der Aktivatorkomponente **A**), einen Schaumstabilisator **A4** (Tegostab B8465; 29 Gew.-% bezogen auf die Gesamtmenge der Aktivatorkomponente **A**) sowie Wasser als Treibmittel **A3** in einer Menge von 25 Gew.-% bezogen auf die Gesamtmenge der Aktivatorkomponente **A**.

### Herstellung der Probekörper:

Es wurden für die Untersuchungen drei verschiedene Arten von Probekörpern hergestellt:
1. Schaumproben aus dem Freischaum
2. Schaumproben aus der Verschäumung von Paneelen in einer Klappdeckelform
3. Schaumproben aus der Verschäumung von leicht verdichteten Paneelen in einer Klappdeckelform zur Klärung der Brandeigenschaften bei gleicher Kernrohdichte.

Allgemein gelten folgende Reaktionsparameter für die Punkte 1. - 3.:
- Rohstofftemperatur 23°C
- Rührerdrehzahl 2000 U/min ( Pendraulikrührer )
- Rührzeit 6-8 sek.
- Aktivatorkomponente **A** wurde vorgelegt, die Prepolymere **B** als 2. Komponente zugegeben
- Formtemperatur für Punkt 2+3 waren jeweils 45°C
- Alle Schäume wurden mit einer Kennzahl von **800** hergestellt.

Bezüglich 1. wurde die Aktivatorkomponente **A** in der vorgeschriebenen Menge in einem Pappbecher vorgegeben und auf 23°C temperiert. Das bereits vortemperierte Prepolymer **B** wird in der berechneten Menge für Kennzahl 800 der Aktivatorkomponente **A** zugegeben und 6-8 Sekunden bei 2000 U/min vermischt. Das Reaktionsgemisch wird nun in ein Papierpäckchen gegossen und folgende Eigenschaften werden bestimmt:
- Reaktivitäten ( Abbindezeit )
- Kernrohdichte ( Rohdichte aus der Schaummitte in kg/m³ )

Bezüglich 2. wurde zur Herstellung der Paneele eine Klappdeckelform (1100mm * 300mm * 50mm) auf 45°C aufgeheizt und mit Papier ausgekleidet. In einem großen Pappbecher wurden die Aktivatorkomponente **A** und das Prepolymer **B** zu einer Gesamtmenge (und unter Einhaltung der Kennzahl 800) von 1080g zusammengemischt. Das Reaktionsgemisch wurde direkt im Anschluss in die geöffnete Klappdeckelform gegossen und diese verschlossen.

Aus dem entstandenen Probekörper wurden folgende Eigenschaften bestimmt:
- Kernrohdichte (in Anlehnung an DIN EN ISO 845)
- Druckfestigkeiten (DIN 826)
- Wärmeleitfähigkeit (DIN 52616)
- Brandverhalten (DIN 4102-1)

Bezüglich 3. wurde die unter Punkt 2. angesprochene Klappdeckelform mittels eines Einlegers auf die Maße 700mm * 300mm * 50mm reduziert, auf ebenfalls 45°C temperiert und mit Papier ausgekleidet. Für die Prepolymere **B** des Beispiels 2 etwa wurde eine Einfüllrohdichte von 85kg/m³ gewählt.

Um eine vergleichbare Kernrohdichte für die Beispiele 4 und 5 zu erzielen, wurde für beide eine Einfüllrohdichte von 90kg/m³ gewählt. Die Verschäumung erfolgte wie unter Punkt 2. Aus dem entstandenen Probekörper wurden folgende Eigenschaften bestimmt:
- Kernrohdichte (in Anlehnung an DIN EN ISO 845)
- Brandverhalten (DIN 4102-1)
- PIR-Umsatz per IR-Spektroskopie

Bei den erfindungsgemäß hergestellten Probekörpern wurde die Härte von einem erfahrenen Techniker ermittelt und als hart eingestuft. Die Sprödigkeit wurde ebenfalls von einem erfahrenen Techniker ermittelt und als gut eingestuft. Insbesondere bei der Härte konnte bei den Vergleichsbeispielen gezeigt werden, dass die Härte nicht ausreichend war. Im Detail zeigten die Vergleichsbeispiele mit geringen NCO-Prozent eine vergleichsweise geringere Härte.

Insgesamt kann in Beispielen gezeigt werden, dass die Einstellung der erfindungsgemäßen Parameter einen unerwarteten Einfluss auf die Eigenschaften der hergestellten Probekörper hat.

Beispielsweise lässt sich aus den Ergebnissen bezüglich der wie unter 2. beschrieben hergestellten Panelen erkennen, dass das Brandergebnis verbessert werden kann durch eine Erhöhung der Funktionalität des Isocyanats. Grundsätzlich zeigen alle erfindungsgemäßen Beispiele gute Flammschutzeigenschaften beziehungsweise Brandschutzeigenschaften, ermittelbar nach DIN 4102-1.

Durch einen Vergleich der Beispiele 4 mit 6 sowie 5 mit 7 lässt sich ferner zeigen, dass durch Anheben der Polyolfunktionalität die Druckfestigkeit verbessert werden kann.

Ein Vergleich der Beispiele 4 und 5, beispielsweise, zeigt, dass die guten Flammschutzeigenschaften nicht unmittelbar von der Rohdichte des Hartschaumstoffs C abhängen.

Ferner konnte gezeigt werden, dass die Funktionalität der Isocyanatblends 1 und 2 sich unmittelbar in der resultierenden Schaumdichte auswirkt. Um einen Schaum mit einer besonders bevorzugten Dichte in einem Bereich von 55 bis 85 kg/m³ herzustellen, ist eine Isocyanatfunktionalität von ≥ 2,3 bis ≤ 2,9 vorteilhaft. Darüber hinaus kann den Beispielen entnommen werden, dass derartige Funktionalitäten auch einen positiven Beitrag zum Brandverhalten aufweisen.

Ein Polyether (Polyole 1, 2, 4 und 5) zeigt weiterhin verbesserte Brandergebnisse bei gleichzeitig ähnlichen Rohdichten, Wärmeleitzahlen und Druckfestigkeiten.

Im Weiteren wurden vorgenannte Beispiele auf ihren Gesamtumsatz beziehungsweise auf ihren spezifischen Umsatz der NCO-Gruppen zu Isocyanuratgruppen, Urethangruppen und Harnstoffgruppen sowie Carbodiimidgruppen untersucht.

Die Untersuchungen erfolgten spektroskopisch unter Verwendung von ATR-FTIR-Spektroskopie (MIRacle-ATR-FTIR-Messeinsatz in einem Bruker VERTEX 70 Spektrometer) von hergestellten

Probekörpern in deren Schaumkern. Dazu wurde aus den Probekörpern jeweils eine dünne Scheibe präpariert, an der zur Bewertung der Gleichmäßigkeit zehn Spektren, jeweils in einem Abstand von 2 cm aufgenommen wurden.

Das Ergebnis der Untersuchungen findet sich in der Tabelle 5.

**Tabelle 5**

| Beispiele | | 2 | 4 | 5 |
|---|---|---|---|---|
| Isocyanat Funktionalität | | 2,3 | 2,3 | 2,9 |
| EO im Polyol | % | 71 | 13 | 13 |
| Gesamtumsatz NCO | % | 87 | 82 | 70 |
| Umsatzbeitrag der Reaktion zu | | | | |
| Isocyanurat | % | 63 | 62 | 53 |
| Urethan/Harnstoff | % | 9,8 | 8,5 | 6,9 |
| Carbodiimid | % | 14,9 | 11,1 | 11,1 |
| Flammhöhen -Kante | mm | 115 | 112 | 68 |
| Flammhöhe -Fläche | mm | 122 | 118 | 80 |

Im Folgenden werden Unterschiede innerhalb der erfindungsgemäßen Beispiele diskutiert, welche sämtlich bereits ein gutes Brandschutzverhalten aufweisen.

Es ist ersichtlich, dass das Beispiel 5 mit einer vergleichsweise höheren NCO-Funktionalität von 2,9 einen niedrigeren Umsatzbeitrag von 53 % zu Polyisocyanurat beziehungsweise zu Isocyanuratgruppen aufweist verglichen mit den Beispielen 2 und 4 (63 % beziehungsweise 62 %), die eine hierzu vergleichsweise niedrigere NCO-Funktionalität (2,3) aufweisen. Dabei weist das Beispiel 5 trotzdem verglichen zu den Beispielen 2 und 4 ein nochmals verbessertes Brandschutzverhalten beziehungsweise Flammschutzverhalten auf.

Folglich kann sich die Prepolymer-Zusammensetzung wie folgt auf das Reaktionsgeschehen auswirken: Der Gesamt-NCO-Umsatz und der Umsatz zu Isocyanurat ist in den Fällen mit höherer NCO-Funktionalität geringer, als in den Fällen niedriger Funktionalität. Die schon in den Edukten angelegte stärkere Vernetzung kann demnach die Reaktion insbesondere in der Endphase behindern. Tendenziell ist der Gesamt-Umsatz bei den beiden Systemen mit dem EO-reichen Prepolymer höher, als bei den Systemen mit dem PO-reichen Prepolymer.

## Patentansprüche

1. Verfahren zum Herstellen eines Polyurethan-Polyisocyanurat-Hartschaumstoffs **C**, umfassend den Schritt der Umsetzung von
(i) einem Isocyanat-terminierten Prepolymer **B**, mit
(ii) einer Aktivatorkomponente **A**, umfassend wenigstens einen Trimerisierungskatalysator **A1** und ein wenigstens ein Treibmittel **A3**,
in einer Reaktionsmischung unter Ausbildung eines Schaums, **dadurch gekennzeichnet dass**
- ein Isocyanat-terminiertes Prepolymer **B**, erhalten aus einer Reaktion eines Isocyanats **B1** aufweisend eine mittlere Isocyanatfunktionalität von ≥ 2,3 bis ≤ 2,9 mit einer Polyolkomponente **B2,** verwendet wird, und
- die Aktivatorkomponente **A** Wasser als Treibmittel **A3** in einer Menge von ≥ 5 Gew.-% bis ≤ 50 Gew.-% umfasst,
- die Isocyanat-Kennzahl in der Reaktionsmischung in einem Bereich von ≥ 400 bis ≤ 1500 liegt,
- der Isocyanat-Gehalt des Prepolymers **B** in einem Bereich von ≥ 21 Gew.-% bis ≤ 30 Gew.-% liegt, bezogen auf die Gesamtmasse des Prepolymers **B**, und
- wobei bei der Umsetzung des Prepolymers B und der Aktivatorkomponente A ein Umsatzbeitrag zu Polyisocyanurat von ≤ 75% erzielt wird.

2. Verfahren nach Anspruch 1, wobei die Reaktionsmischung keine Polyole mit einer OH-Zahl von < 400 mg KOH/g aufweist.

3. Verfahren nach Anspruch 1 oder 2, wobei die Reaktionsmischung kein Flammschutzmittel **A5** aufweist.

4. Verfahren nach einem der vorstehenden Ansprüche, wobei das Verfahren den weiteren Schritt eines Sprühauftrags der Reaktionsmischung auf ein Substrat umfasst.

5. Verfahren nach einem der vorstehenden Ansprüche, wobei das Prepolymer **B** und die Aktivatorkomponente **A** einzeln über Einlässe von außen in einen Sprühkanal einer Düse eingeleitet werden und diese in dem Sprühkanal vermischt werden, wobei der Sprühkanal wenigstens eine Mischebene aufweist, in welche durch wenigstens einen tangential angeordneten Gaskanal wenigstens ein Mischgas eingeleitet wird.

6. Verfahren nach einem der vorstehenden Ansprüche, wobei das Isocyanat-terminierte Prepolymer **B** erhalten wird aus wenigstens einem Isocyanat **B1,** ausgewählt aus der Gruppe bestehend aus Toluylendiisocyanat, Diphenylmethandiisocyanat, Hexamethylendiisocyanat, Diisocyanato-dicyclohexylmethan und Isophorondiisocyanat und wenigstens einer Polyolkomponente **B2** umfassend wenigstens ein Polyesterpolyol oder Polyetherpolyol.

7. Verfahren nach Anspruch 6, wobei als Polyetherpolyol wenigstens ein Additionsprodukt von Styroloxid, Ethylenoxid, Propylenoxid, Butylenoxid und/oder Epichlorhydrin an di- oder polyfunktionelle Startermoleküle verwendet wird.

8. Verfahren nach einem der vorstehenden Ansprüche, wobei der Trimerisierungskatalysator **A1** ausgewählt ist aus der Gruppe bestehend aus Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat und/oder Dioctylzinndiacetat, Tris-(N,N-dimethylaminopropyl)-s-hexahydrotriazin, Tetramethylammoniumhydroxid Natriumhydroxid, Natrium-N-[(2-hydroxy-5-nonylphenyl)methyl]-N-methylaminoacetat, Natriumacetat, Natriumoctoat, Kaliumacetat und/oder Kaliumoctoat oder Gemische der vorgenannten Katalysatoren.

9. Polyurethan-Polyisocyanurat-Hartschaumstoff **C**, erhältlich nach einem Verfahren gemäß einem der Ansprüche 1 bis 8.

10. Polyurethan-Polyisocyanurat-Hartschaumstoff **C** nach Anspruch 9, wobei der Polyurethan-Polyisocyanurat-Hartschaumstoff **C** bei einem Brandtest/Kante eine Flammenhöhe von ≤ 150 mm, ermittelbar nach DIN 4102-1, aufweist und/oder wobei der Polyurethan-Polyisocyanurat-Hartschaumstoff **C** bei einem Brandtest/Fläche eine Flammenhöhe von ≤ 150 mm, ermittelbar nach DIN 4102-1, aufweist.

11. Polyurethan-Polyisocyanurat-Hartschaumstoff **C** nach Anspruch 9 oder 10, wobei der Polyurethan-Polyisocyanurat-Hartschaumstoff **C** eine Wärmeleitzahl von ≤ 32 mW/(m × K), ermittelbar nach DIN 52616, aufweist.

12. Polyurethan-Polyisocyanurat-Hartschaumstoff **C** nach einem der Ansprüche 9 bis 11, wobei der Polyurethan-Polyisocyanurat-Hartschaumstoff **C** eine Druckfestigkeit von ≥ 0,20 MPa, ermittelbar nach DIN 826, aufweist.

13. Verwendung eines Polyurethan-Polyisocyanurat-Hartschaumstoffs **C** gemäß einem der Ansprüche 9 bis 12 zur Herstellung von wärmedämmenden Bauteilen.

14. Wärmedämmendes Bauteil umfassend einen Polyurethan-Polyisocyanurat-Hartschaumstoff C gemäß einem der Ansprüche 9 bis 12.

## Claims

1. Process for producing a rigid polyurethane-polyisocyanurate foam **C**, comprising the step of reacting
(i) an isocyanate-terminated prepolymer **B** with
(ii) an activator component **A** comprising at least one trimerisation catalyst **A1** and at least one blowing agent **A3**
in a reaction mixture to form a foam, **characterised in that**
- there is used an isocyanate-terminated prepolymer **B** obtained from a reaction of an isocyanate **B1** having a mean isocyanate functionality of from ≥ 2.3 to ≤ 2.9 with a polyol component **B2**, and
- the activator component **A** comprises water as the blowing agent **A3** in an amount of from ≥ 5 wt.% to ≤ 50 wt.%,
- the isocyanate index in the reaction mixture is in a range of from ≥ 400 to ≤ 1500,
- the isocyanate content of the prepolymer **B** is in a range of from ≥ 21 wt.% to ≤ 30 wt.%, based on the total mass of the prepolymer **B**, and
- wherein in the reaction of the prepolymer B and the activator component A, a conversion contribution to polyisocyanurate of ≤ 75% is achieved.

2. Process according to claim 1, wherein the reaction mixture does not contain any polyols having an OH number of < 400 mg KOH/g.

3. Process according to claim 1 or 2, wherein the reaction mixture does not contain flame retardant **A5.**

4. Process according to any one of the preceding claims, wherein the process comprises the further step of a spray application of the reaction mixture to a substrate.

5. Process according to any one of the preceding claims, wherein the prepolymer **B** and the activator component **A** are introduced individually from the outside into a spray channel of a nozzle via inlets and are mixed in the spray channel, the spray channel having at least one mixing level into which at least one mixed gas is introduced through at least one tangentially arranged gas channel.

6. Process according to any one of the preceding claims, wherein the isocyanate-terminated prepolymer **B** is obtained from at least one isocyanate **B1** selected from the group consisting of toluene diisocyanate, diphenylmethane diisocyanate, hexamethylene diisocyanate, diisocyanato-dicyclohexylmethane and isophorone diisocyanate, and at least one polyol component **B2** comprising at least one polyester polyol or polyether polyol.

7. Process according to claim 6, wherein there is used as the polyether polyol at least one addition product of styrene oxide, ethylene oxide, propylene oxide, butylene oxide and/or epichlorohydrin on di- or poly-functional starter molecules.

8. Process according to any one of the preceding claims, wherein the trimerisation catalyst **A1** is selected from the group consisting of tin(II) acetate, tin(II) octoate, tin(II) ethylhexoate, tin(II) laurate, dibutyltin diacetate, dibutyltin dilaurate, dibutyltin maleate and/or dioctyltin diacetate, tris-(N,N-dimethylaminopropyl)-s-hexahydrotriazine, tetramethylammonium hydroxide, sodium hydroxide, sodium N-[(2-hydroxy-5-nonylphenyl)methyl]-N-methylaminoacetate, sodium acetate, sodium octoate, potassium acetate and/or potassium octoate or mixtures of the above-mentioned catalysts.

9. Rigid polyurethane-polyisocyanurate foam **C** obtainable by a process according to any one of claims 1 to 8.

10. Rigid polyurethane-polyisocyanurate foam **C** according to claim 9, wherein the rigid polyurethane-polyisocyanurate foam **C** has a flame height of ≤ 150 mm, determinable in accordance with DIN 4102-1, in a fire test/edge and/or wherein the rigid polyurethane-polyisocyanurate foam **C** has a flame height of ≤ 150 mm, determinable in accordance with DIN 4102-1, in a flame test/surface.

11. Rigid polyurethane-polyisocyanurate foam **C** according to claim 9 or 10, wherein the rigid polyurethane-polyisocyanurate foam **C** has a coefficient of thermal conductivity of ≤ 32 mW/(m × K), determinable in accordance with DIN 52616.

12. Rigid polyurethane-polyisocyanurate foam **C** according to any one of claims 9 to 11, wherein the rigid polyurethane-polyisocyanurate foam **C** has a compressive strength of ≥ 0.20 MPa, determinable in accordance with DIN 826.

13. Use of a rigid polyurethane-polyisocyanurate foam **C** according to any one of claims 9 to 12 in the production of heat-insulating structural components.

14. Heat-insulating structural component comprising a rigid polyurethane-polyisocyanurate foam **C** according to any one of claims 9 to 12.

## Revendications

1. Procédé de fabrication d'une mousse dure de polyuréthane-polyisocyanurate C, comprenant l'étape de mise en réaction de
(i) un prépolymère à terminaison isocyanate B avec
(ii) un composant activateur A, comprenant au moins un catalyseur de trimérisation A1 et au moins un agent gonflant A3,
dans un mélange réactionnel avec formation d'une mousse, **caractérisé en ce que**
- un prépolymère à terminaison isocyanate B, obtenu par une réaction d'un isocyanate B1 présentant une fonctionnalité isocyanate moyenne de ≥ 2,3 à ≤ 2,9 avec un composant polyol B2, est utilisé, et
- le composant activateur A comprend de l'eau en tant qu'agent gonflant A3 en une quantité de ≥ 5 % en poids à ≤ 50 % en poids,
- l'indice d'isocyanate dans le mélange réactionnel se situe dans une plage allant de ≥ 400 à ≤ 1 500,
- la teneur en isocyanate du prépolymère B se situe dans une plage allant de ≥ 21 % en poids à ≤ 30 % en poids, par rapport à la masse totale du prépolymère B, et
- lors de la mise en réaction du prépolymère B et du composant activateur A, une contribution à la conversion en polyisocyanurate de ≤ 75 % est obtenue.

2. Procédé selon la revendication 1, dans lequel le mélange réactionnel ne comprend pas de polyols ayant un indice OH < 400 mg KOH/g.

3. Procédé selon la revendication 1 ou 2, dans lequel le mélange réactionnel ne comprend pas d'agent ignifuge A5.

4. Procédé selon l'une quelconque des revendications précédentes, dans lequel le procédé comprend l'étape supplémentaire d'application par pulvérisation du mélange réactionnel sur un substrat.

5. Procédé selon l'une quelconque des revendications précédentes, dans lequel le prépolymère B et le composant activateur A sont introduits individuellement par des entrées depuis l'extérieur dans un canal de pulvérisation d'une buse et sont mélangés dans le canal de pulvérisation, le canal de pulvérisation comprenant au moins un plan de mélange dans lequel au moins un gaz de mélange est introduit par au moins un canal de gaz agencé de manière tangentielle.

6. Procédé selon l'une quelconque des revendications précédentes, dans lequel le prépolymère à terminaison isocyanate B est obtenu à partir d'au moins un isocyanate B1, choisi dans le groupe constitué par le diisocyanate de toluylène, le diisocyanate de diphénylméthane, le diisocyanate d'hexaméthylène, le diisocyanato-dicyclohexylméthane et le diisocyanate d'isophorone, et d'au moins un composant polyol B2 comprenant au moins un polyester-polyol ou un polyéther-polyol.

7. Procédé selon la revendication 6, dans lequel au moins un produit d'addition d'oxyde de styrène, d'oxyde d'éthylène, d'oxyde de propylène, d'oxyde de butylène et/ou d'épichlorhydrine sur des molécules de départ di- ou polyfonctionnelles est utilisé en tant que polyéther-polyol.

8. Procédé selon l'une quelconque des revendications précédentes, dans lequel le catalyseur de trimérisation A1 est choisi dans le groupe constitué par l'acétate d'étain (II), l'octoate d'étain (II), l'éthylhexoate d'étain (II), le laurate d'étain (II), le diacétate de dibutylétain, le dilaurate de dibutylétain, le maléate de dibutylétain et/ou le diacétate de dioctylétain, la tris-(N,N-diméthylaminopropyl)-s-hexahydrotriazine, l'hydroxyde de tétraméthylammonium, l'hydroxyde de sodium, le N-[(2-hydroxy-5-nonylphényl)méthyl]-N-méthylaminoacétate de sodium, l'acétate de sodium, l'octoate de sodium, l'acétate de potassium et/ou l'octoate de potassium ou les mélanges des catalyseurs susmentionnés.

9. Mousse dure de polyuréthane-polyisocyanurate C, pouvant être obtenue par un procédé selon l'une quelconque des revendications 1 à 8.

10. Mousse dure de polyuréthane-polyisocyanurate C selon la revendication 9, dans laquelle la mousse dure de polyuréthane-polyisocyanurate C présente lors d'un test de combustion/bord une hauteur de flamme ≤ 150 mm, pouvant être déterminée selon DIN 4102-1, et/ou dans laquelle la mousse dure de polyuréthane-polyisocyanurate C présente lors d'un test de combustion/surface une hauteur de flamme ≤ 150 mm, pouvant être déterminée selon DIN 4102-1.

11. Mousse dure de polyuréthane-polyisocyanurate C selon la revendication 9 ou 10, dans laquelle la mousse dure de polyuréthane-polyisocyanurate C présente un coefficient de conductivité thermique ≤ 32 mW/(m x K), pouvant être déterminé selon DIN 52616.

12. Mousse dure de polyuréthane-polyisocyanurate C selon l'une quelconque des revendications 9 à 11, dans laquelle la mousse dure de polyuréthane-polyisocyanurate C présente une résistance à la compression 0,20 MPa, pouvant être déterminée selon DIN 826.

13. Utilisation d'une mousse dure de polyuréthane-polyisocyanurate C selon l'une quelconque des revendications 9 à 12 pour la fabrication de composants isolant thermiquement.

14. Composant isolant thermiquement comprenant une mousse dure de polyuréthane-polyisocyanurate C selon l'une quelconque des revendications 9 à 12.
